# EUROPEAN PATENT SPECIFICATION

(11) **EP 3 247 926 B1**
(45) Date of publication and mention of the grant of the patent: **27.03.2019**
(21) Application number: 16705361.0
(22) Date of filing: 22.01.2016
(51) Int. Cl.: F16H 63/34, A01B 33/06, A01B 33/02, A01B 33/08, F16H 57/08

(54) **VERTICAL TINE TILLER**
FRÄSE MIT VERTIKALEN ZINKEN
FRAISEUSE DE LABOUR À POINTES VERTICALES

(30) Priority: 22.01.2015 US 201562106539 P
(43) Date of publication of application: 29.11.2017
(73) Proprietor: MTD Products Inc., Valley City, OH 44280 (US)
(72) Inventor: MAGGARD, Jay, Seven Hills, Ohio 44131 (US); KELLY, David, Valley City, Ohio 44280 (US); CRAWFORD, Paul, Valley City, Ohio 44280 (US)
(74) Representative: Conti, Marco
(86) International application number: PCT/US2016/014609
(87) International publication number: WO 2016/118912

(56) References cited:
- WO-A1-2013/177406
- DE-A1- 3 222 098
- DE-U1-202009 014 994
- JP-A- 2003 318 555
- US-A- 3 434 356
- US-A- 4 354 564
- US-A- 4 493 404

## Description

### BACKGROUND

### 1. Field of the Disclosure

The present disclosure is directed to gear train devices, and more particularly, a locking device to engage and disengage elements of the transmission while under load and/or without the need for a clutch.

### 2. Description of Related Art

Known power transmission gear trains often include a locking device to change the speed or direction of rotation of particular components of the gear train. Many of the locking devices require significant force to engage or disengage the locking device. This is particularly true of locking devices that include "in-out" or "up-down" designs which require either significant force to disengage the locking device or even an elimination of the rotational load on the gear train in order to disengage the locking device. The same degree of difficulty of disengaging the locking device can be exhibited in known rotating pawl designs that interact with cooperating shapes on gears and/or shafts.

Therefore, there exists a need for a locking device that can be selectively placed into and out of an engaged position with relative ease and may enable engagement/disengagement while a load is applied to the gear train, and even while the gear train is moving (e.g., rotating).

Examples of gear train locking device are known from the following patent documents: US 3434356A (in accordance with the preamble of claim 1) and US 4493404A.

### SUMMARY

Purpose of the present invention is to provide a gear train locking device which improves the states of art indicated above. This is achieved by the gear train locking device according to claim 1. Preferred embodiments of the invention are defined in the dependent claims.

Advantages of the present invention will become more apparent to those skilled in the art from the following description of the embodiments of the invention. As will be realized, the described apparatus and methods are capable of other and different embodiments, and their details are capable of modification in various respects.

### BRIEF DESCRIPTION OF THE DRAWINGS

These and other features of the present disclosure, and their advantages, are illustrated specifically in embodiments of the apparatus and methods now to be described, by way of example, with reference to the accompanying diagrammatic drawings, in which:
FIG. 1 is a top view of a vertical tine tiller serving as an example piece of powered equipment that can include an embodiment of a gear drive train locking device;
FIG. 2 is a side view of the vertical tine tiller shown in FIG. 1;
FIG. 3 is an exploded view of a transfer casing, transmission gear drive assembly, and a tiller assembly of the vertical tine tiller of FIG. 1;
FIG. 4 is a side cross-sectional view of a portion of the tiller of FIG. 1;
FIG. 5 is a portion of the exploded view of FIG. 3;
FIG. 6 is a perspective view of a drive portion of the tiller of FIG. 1;
FIG. 7 is a side view of a portion of the gear drive assembly of FIG. 3 showing a locking shaft in a disengaged position;
FIG. 8 is a cross-section view of the gear drive assembly of FIG. 3;
FIG 9 is a perspective view of a pair of the gear drive assembly with the locking shaft in an engaged position;
FIG. 10 is a side view of the gear drive assembly with the locking shaft;
FIG. 11 is a perspective view of a second embodiment of a gear drive train having two epicyclical gear sets and one locking shaft;
FIG. 12 is a cross-section view the gear drive train of FIG. 11;
FIG. 13 is a perspective view of the gear drive train of FIG. 11 showing different planetary gears within the two epicyclical gear sets;

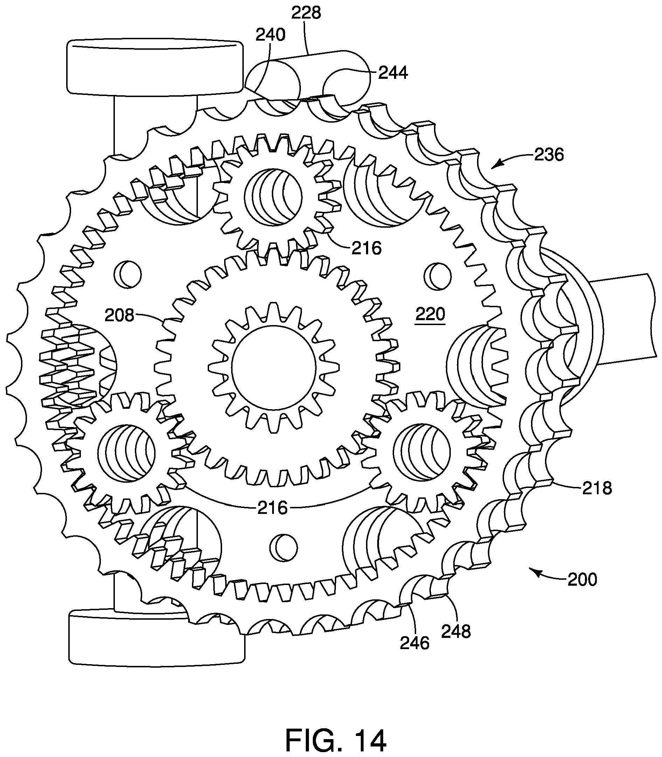

FIG. 14 is a perspective view of the gear drive train of FIG. 11 showing the locking shaft in a disengaged position for the front ring gear and in an engaged position for the rear ring gear;

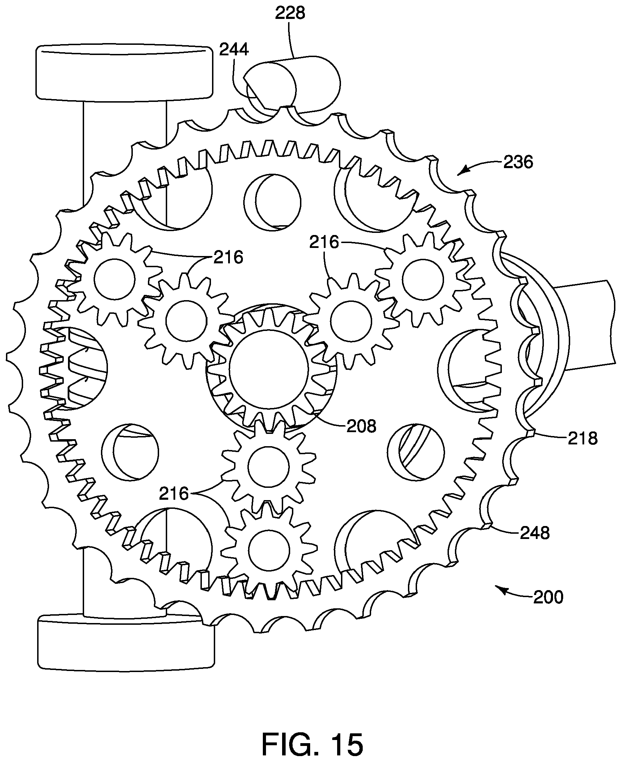

FIG. 15 is similar to FIG. 14 showing only the rear ring gear;
FIG. 16 is a detail view of the locking shaft from FIG. 13;
FIG. 17 is similar to FIG. 16 showing the locking shaft in an engaged position for the front ring gear and a disengaged position for the rear ring gear; and
FIG. 18 is similar to FIG. 16 showing the locking shaft in a disengaged position for both ring gears.

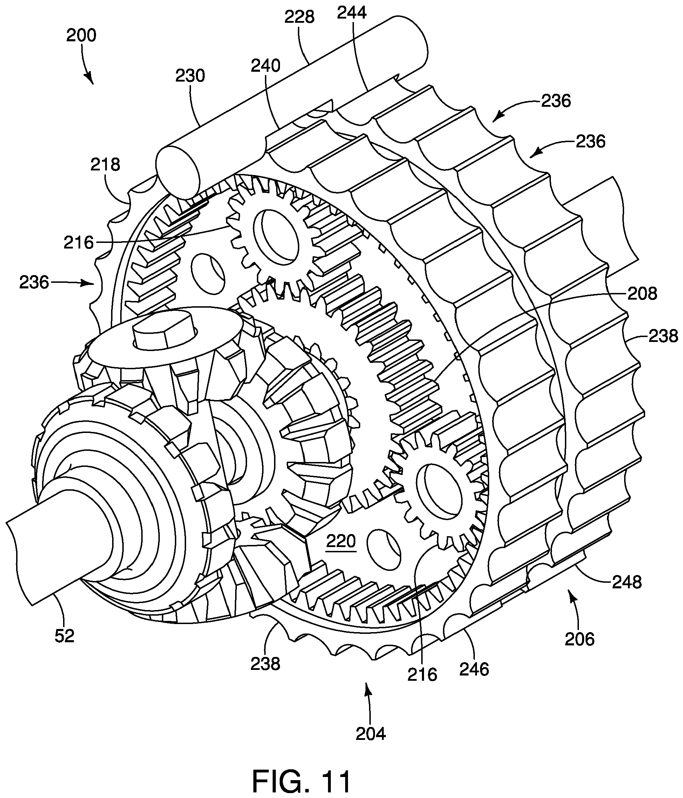

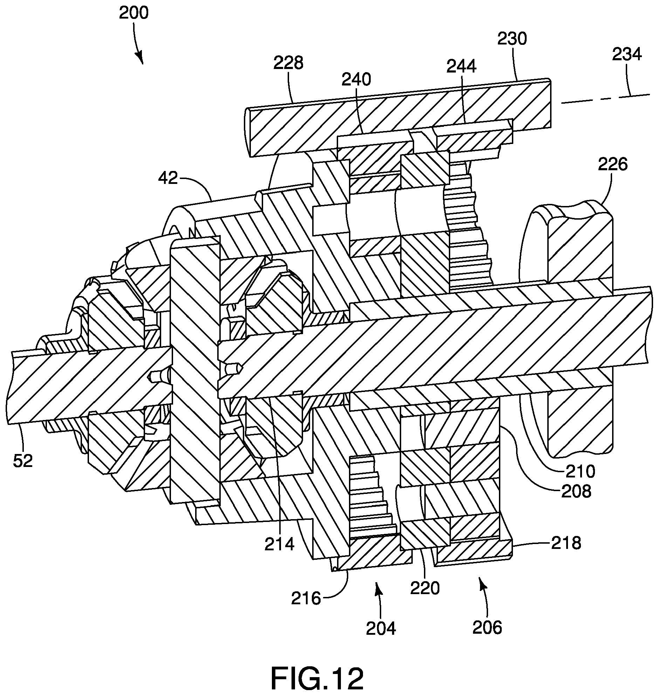

FIG. 12 is a cross-section of the planetary gear set of FIG. 11;

It should be noted that all of the drawings are diagrammatic and not drawn to scale. Relative dimensions and proportions of parts of these figures may have been shown exaggerated or reduced in size for the sake of clarity and convenience in the drawings. The same reference numbers are generally used to refer to corresponding or similar features in the different embodiments. Accordingly, the drawing(s) and description are to be regarded as illustrative in nature and not as restrictive.

### DETAILED DESCRIPTION

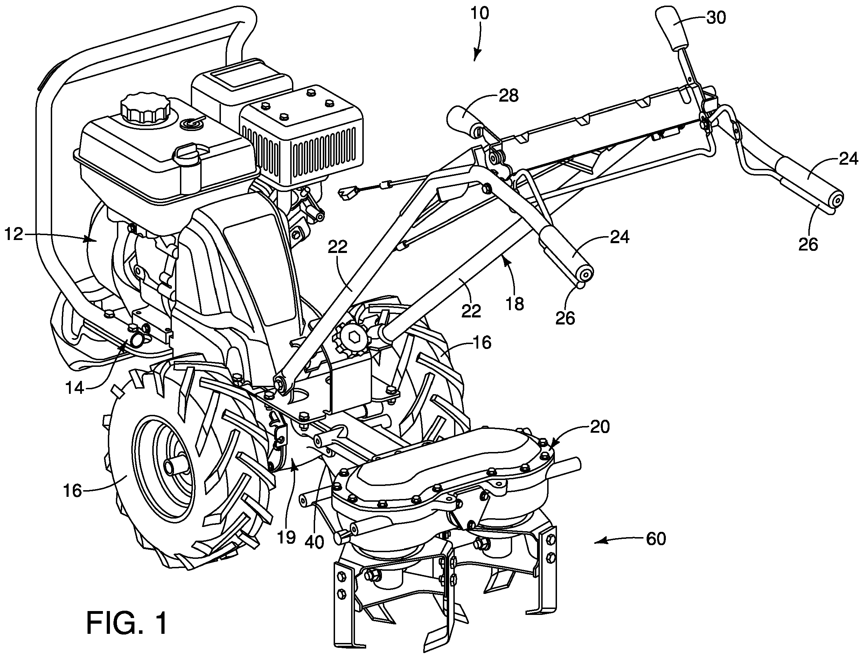

Referring to FIG. 1, an exemplary embodiment of a vertical tine tiller 10 is shown. The vertical tine tiller 10 includes a power source 12, a frame 14, at least two rotatable wheels 16 rotatably connected to the frame 14, an operator control assembly 18, a transmission assembly 19 for driving the wheels 16, a transfer casing 40, and a tiller assembly 20. The power source 12 is attached to the frame 14 for stability. The power source 12 can be any gas- or fuel-powered engine, electric motor, a combination thereof, or any other type of commonly known power sources that can generate a rotational output. The illustrated embodiment of the vertical tine tiller 10 includes an engine configured to provide a rotational output, as will be discussed below.

The frame 14 is a substantially rigid combination of members attached to each other to provide a solid base to which the components of the vertical tine tiller 10 can be attached. The vertical tine tiller 10 includes a pair of wheels 16 rotatably connected to the frame 14, as shown in FIG. 1, wherein the wheels 16 may be either movable by pushing/pulling by the operator or driven by way of a transmission (not shown) operatively connected to the frame 14.

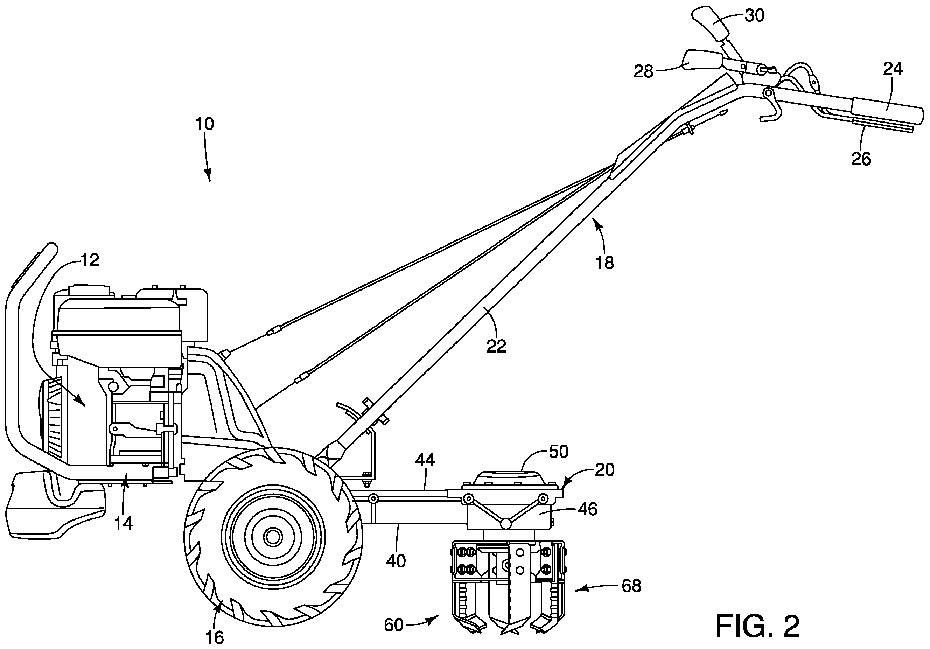

The operator control assembly 18 of the exemplary embodiment, shown in FIGS. 1-2, includes a pair of arms 22 extending from the frame 14. Each arm 22 includes a grip 24 positioned at the end of the arm 22. The operator control assembly 18 further includes a plurality of switches and levers that allow the operator to control the operation of the power source 12, transmission for powering the wheels 16, and the tiller assembly 20. Each of the switches and levers is positioned to allow the operator to be able to easily control the particular component or assembly while still being able to maintain control of the vertical tine tiller 10. For example, a pair of forward transmission engagement levers 26 having a pair of graspable extensions are located beneath each of the grips 24 to allow the operator to be able to squeeze either or both of the forward transmission engagement levers 26 while simultaneously grasping the corresponding grip 24. The forward transmission engagement lever(s) 26 is configured to engage or disengage the transmission which provides torque to both of the wheels 16 as well as rotational movement to the tine assemblies 60. When either of the forward transmission engagement levers 26 is actuated, the transmission becomes engaged in the forward direction. The engaged transmission drives the tine assemblies 60 while the forward transmission engagement levers 26 are actuated. Additionally, when the forward transmission engagement levers 26 are actuated, forward rotational torque is applied to the wheels 16 if the wheel engagement lever 28 is also actuated at the same time. However, if the forward transmission engagement lever 26 is actuated but the wheel engagement lever 28 is not actuated, there is no rotational torque applied to the wheels 16.

The illustrated embodiment of the operator control assembly 18 also includes a wheel engagement lever 28 located within easy reach of the grip 24, as shown in FIGS. 1-2. The wheel engagement lever 28 is a rotatable lever that allows the operator to selectively control the engagement and disengagement between the transmission and the wheels 16 for moving the tiller 10. Pulling the wheel engagement lever 28 rearwardly with the forward transmission engagement lever 26 engaged causes the transmission to engage with the wheels 16, which causes the wheels to rotate forwardly and drive the tiller 10. Movement of the wheel engagement lever 28 forwardly causes the transmission to become disengaged from the wheels 16.

The operator control assembly 18, shown in FIGS. 1-2, further includes a reverse transmission engagement lever 30. The reverse transmission engagement lever 30 is located within easy reach of the grip 24. The reverse transmission engagement lever 30 is operatively connected to the transmission assembly 19 by way of a wire located within a protective sheath. The reverse transmission engagement lever 30 allows the operator to selectively engage or disengage the transmission in the reverse direction. When the reverse transmission engagement lever 30 is pulled rearwardly, the transmission is engaged in the reverse direction which causes the tine assemblies 60 to rotate in the opposite direction than when the forward transmission engagement lever 26 is actuated. If the wheel engagement lever 28 is actuated, the wheels 16 are also driven rearwardly by the transmission assembly 19. If the wheel engagement lever 28 is not actuated, then only the tine assemblies 60 are engaged with and driven by the transmission. In short, when either the forward transmission engagement lever 26 or the reverse transmission engagement lever 30 is actuated, torque will be applied to the tine assemblies 60 to drive the tiller function. The transmission only engages the wheels to drive the wheels forwardly or rearwardly is by actuation of the wheel engagement lever 28.

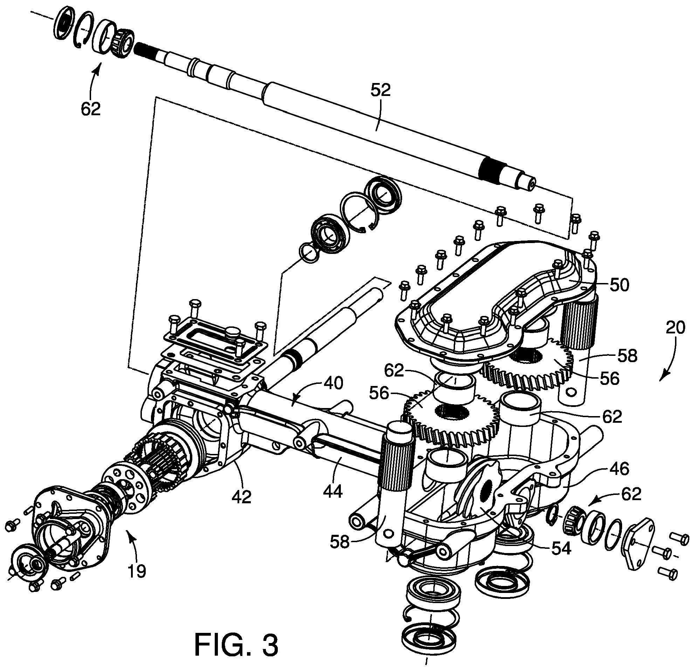

In the exemplary embodiment of the vertical tine tiller 10 shown in FIGS. 1-2, the transmission assembly 19 is operatively connected to the rear of the frame 14. The transmission assembly 19 is configured to drive the wheels 16 forwardly or rearwardly to move the vertical tine tiller 10. The transmission assembly 19 receives the rotational output from the power source 12, and transfers that rotational output into rotation of the wheels 16 through a series of gears. The transmission assembly 19 includes a plurality of gears and drivetrains, as shown in FIG. 3. In other embodiments, the vertical tine tiller 10 does not include a transmission assembly 19 and instead is moved forwardly and rearwardly by the operator.

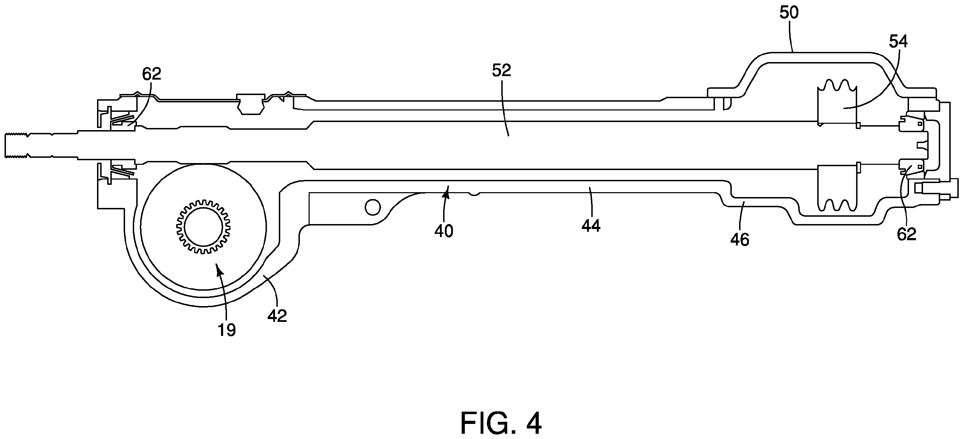

Turning to FIG. 3, the transmission assembly 19 is shown in exploded view. FIG. 4 shows the positional relationship between the transmission assembly 19 and the driveshaft 52. While not shown in FIG. 4, it is to be understood that the power source 12 can be located at the far left of FIG. 4 to supply rotational power to the driveshaft 52.

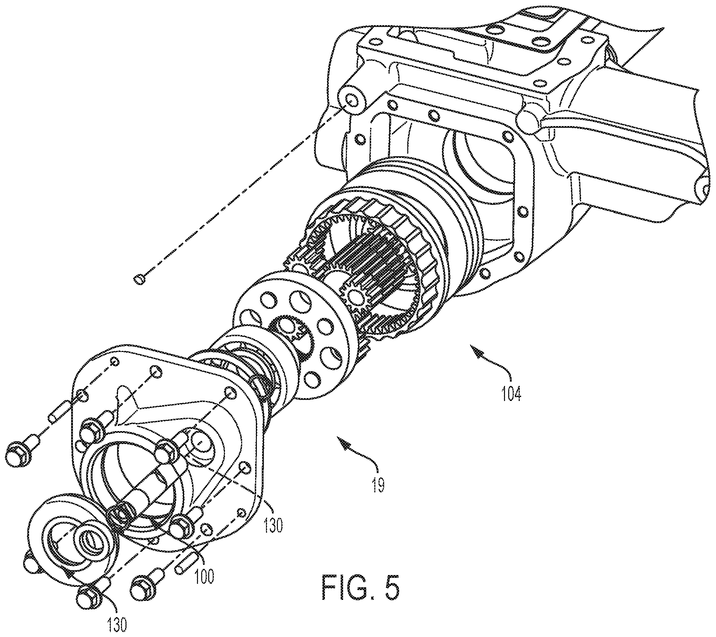

Turning to FIG. 5, the transmission assembly 19 is shown in greater detail than FIG. 3. The transmission assembly 19 can include a gear train locking device 100. The transmission assembly 19 can include any number and/or type of gear trains or power transmission drive trains including, but not limited to planetary gear sets, differential gears, epicyclical gears, etc. In one particular example, the transmission assembly 19 includes a planetary gear set 104. It is to be understood that the disclosed gear train locking device 100 can be used on any suitable device that employs drive trains, gear trains, transmissions and similar apparatus. Much of the remainder of this disclosure discusses examples of the gear train locking device 100 and the transmission assembly 19 in association with a vertical tine tiller, however, this example is not meant to be limiting, and the claimed apparatus can be used in any number of devices.

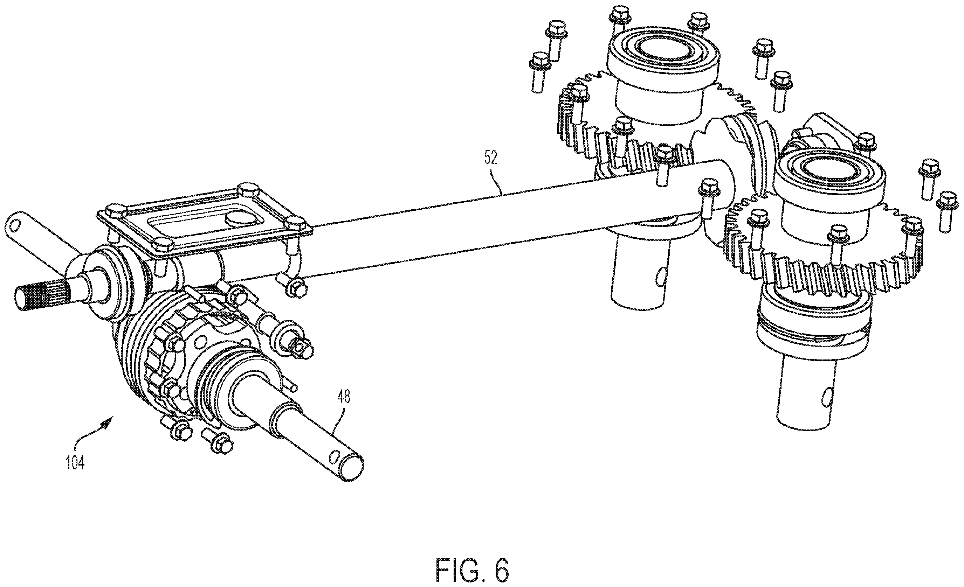

FIG. 6 shows a perspective view of the planetary gear set 104 in relation to the driveshaft 52.

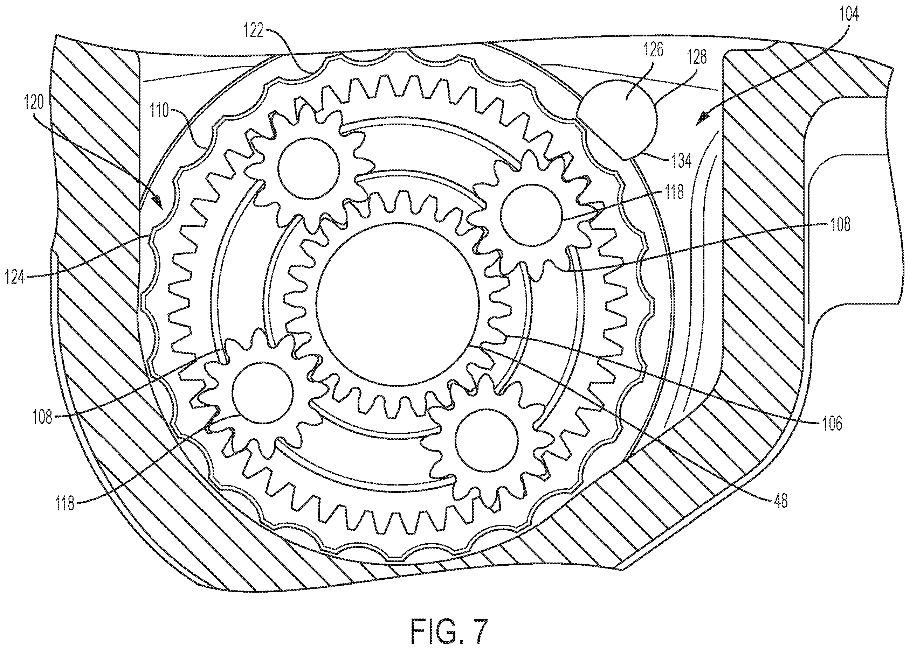

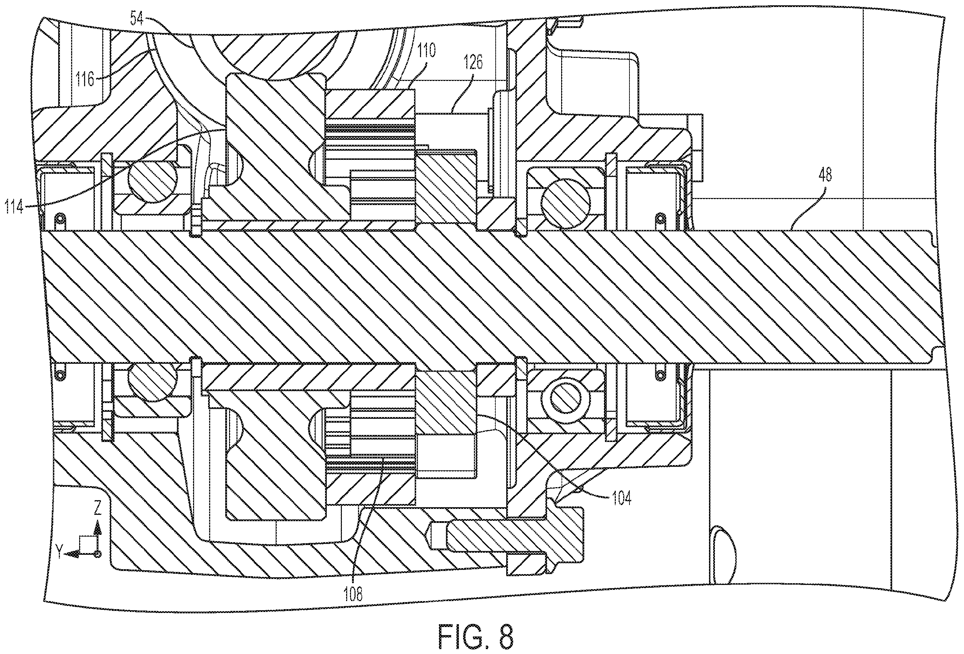

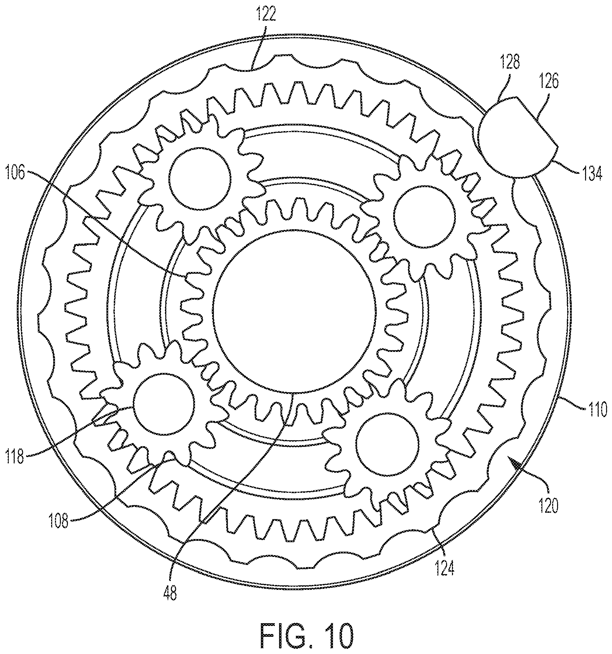

FIGS. 7 and 10 show cross-section side views of the planetary gear set 104 from the cross-section view of FIG. 8. In the shown example of FIG. 7, the plurality of gears includes a sun gear 106, a plurality of planet gears 108 that are engaged with the sun gear 106, a ring gear 110 that is engaged with the plurality of planet gears 108, a first transfer gear 114 that is mounted to the sun gear 106. The first transfer gear 114 is engaged with a second transfer gear 116 that is mounted to the driveshaft 52 and can serve as an input of rotational power to the planetary gear set 104.

The planetary gear set 104 also includes a plurality of shafts that are connected to the gears for transmitting rotational motion. The gears can serve several functions including reducing speed and power of the rotational motion from shaft to shaft, altering the direction of the rotational motion from shaft to shaft, etc. In the shown example, the shafts can include the previously mentioned driveshaft 52, a plurality of planet gear shafts 118, and a wheel axle 48. Of course, other examples of transmission assemblies may include any number of shafts.

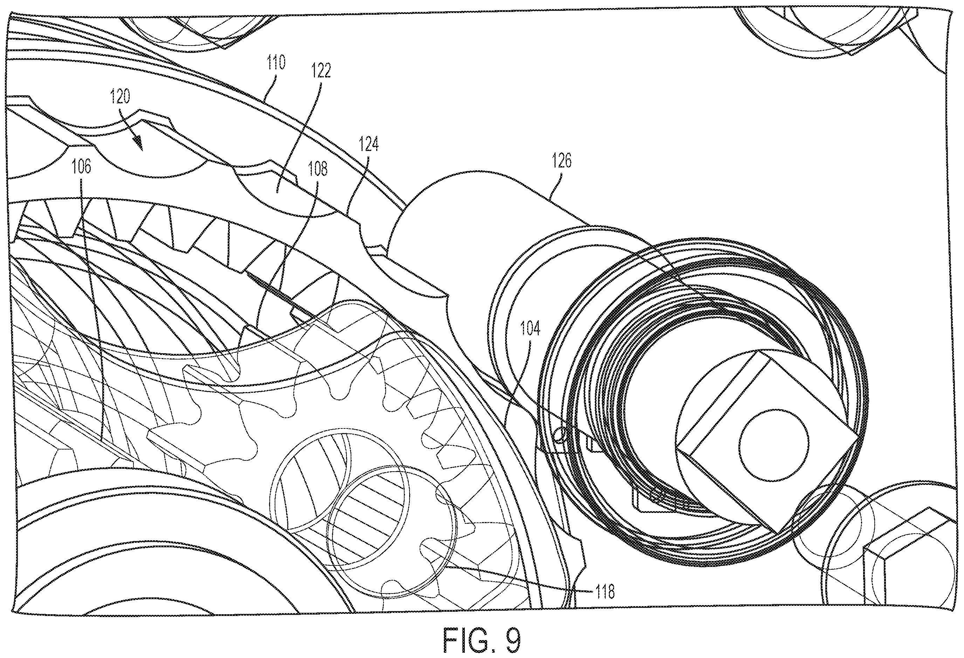

At least one of the gears and/or shafts defines a plurality of cavities 120. As shown in FIGS. 7, 9 and 10, the cavities 120 are located at an outside diameter 124 of a portion of the ring gear 110 or shaft. Additionally, the cavities 120 can have a curved surface 122. In the particular example shown in the figures, the ring gear 110 defines the cavities 120 at an outside diameter 124 of the ring gear 110.

The transmission assembly 19 also includes a locking shaft 126 having an outside diameter 128 and a shaft axis 130. The locking shaft 126 rotates about the shaft axis 130, and this rotation selectively moves said locking shaft 126 between an engaged position shown in FIG. 10 and a disengaged position shown in FIG. 7. The locking shaft 126 can further include a cross-section 134 that is D-shaped (best seen in FIG. 7). This non-circular (or partially circular) cross-section enables the locking shaft 126 to move between the engaged position and the disengaged position merely by rotation about its shaft axis 130. As illustrated, when the locking shaft 126 is in the disengaged position, the flat portion of the D-shaped cross-section is substantially tangential to the ring gear 110 and, because of its non-circular cross-section shape, no portion of the locking shaft 126 enters the space within the cavity 120. However, as the locking shaft 126 rotates into the engaged position, the round portion of the D-shaped cross-section 134 extends into the cavity 120 space to engage the ring gear 110. The locking shaft 126 can be referred to as a "Maggard Key."

As such, the engaged position of the locking shaft 126 creates a physical interference to change the rotational motion of at least one of the gears or the shafts such as preventing rotational motion of the ring gear 110 relative to the locking shaft 126 and any other fixed point on the transmission assembly 19. Additionally, the disengaged position of the locking shaft 126 removes the described physical interference and enables the ring gear 110 to rotate relative to the locking shaft 126 or another of the gears.

As can be seen, the engaged position places the outside diameter 128 of the locking shaft 126 into engagement with one of the gears or the shafts (e.g. the ring gear 110). In this example, the locking shaft 126 rotates into and out of the engaged position through sliding contact with the curved surface 122 of the ring gear 110. The described arrangement of the locking shaft 126 and its partially circular cross-section 134 cooperating with the curved surface 122 of the cavity 120 can provide the benefit of significantly reducing the force required to engage or disengage the locking mechanism. This is particularly true while the transmission assembly 19 is under load. For example, previously known devices can include "in-out" or "up-down" designs which require either significant force to disengage the locking mechanism or even an elimination of the rotational load on the gear train in order to disengage the locking mechanism. The same degree of difficulty in operation can be true of known rotating pawl designs that interact with cooperating shapes on gears and/or shafts. However, the described locking shaft 126 can be rotated into and out of the engaged position with the ring gear 110 under load and even when the ring gear 110 is rotating. As such, the gear train locking device 100 does not require a clutch.

In one example, the locking shaft 126 is manually rotated into and out of the engaged position by an associated operator (e.g, by using the wheel engagement lever 28). In another example, the locking shaft 126 is operably connected to a controller (not shown) located on a powered lawn device, such as the example device shown in FIG. 1.

The following will serve as a description of the operation of an exemplary transmission assembly 19 as illustrated in the figures. The locking shaft 126 is in the disengaged position as shown in FIG. 7 which corresponds with the operator desiring the powered lawn device to remain stationary. The driveshaft 52 is operatively connected to the power source 12 and rotates relative to the transfer casing 40. The second transfer gear 116 is mounted to the driveshaft 52 such that rotation of the driveshaft 52 causes rotation of the second transfer gear 116. The second transfer gear is continuously engaged with the first transfer gear 114 to cause rotation thereof. The first transfer gear 114 is mounted to the sun gear 106.

Rotation of the sun gear 106 causes rotation of the plurality of planet gears 108 which urge rotation of the ring gear 110. The plurality of planet gears 108 rotate about their respective planet gear shafts 118, but do not cause rotation of the planet gear carrier 104. In one example, the lack of rotational motion of the planet gear carrier 104 is due to the resistance provided by bearings, seals, and the ground contact of the wheels. As such, all of the transmission assembly 19 output corresponds to the rotation of the ring gear 110. As a result, even though the transmission assembly 19 and the driveshaft 52 are in continuous engagement, the wheel axle 106 does not turn when the locking shaft 126 is in the disengaged position. In another example, a wheel or axle brake may be employed with this apparatus, but it is not necessary.

As the operator decides to engage the drive wheels of the device, the operator can urge a device (not shown) such as a lever to urge rotation of the locking shaft 126. The locking shaft 126 then rotates from the disengaged position shown in FIG. 7 to the engaged position shown in FIG. 10. This rotation can be effected even as the ring gear 110 is rotating. As the circular portion of the cross-section 134 enters the cavity 120, the physical interference to rotational motion of the ring gear 110 holds the ring gear 110 in a stationary location relative to the locking shaft 126. As such, no clutch is needed to stop the ring gear 110 even when shifting between drive and neutral operations.

In the engaged position, physical interference prevents the output of the transmission assembly 19 from rotating the ring gear 110. As such, the fixed ring gear 110 causes rotation of the planet gear shafts 118 relative to the sun gear 106, causing rotation of the planet gear carrier 104. The planet gear carrier 104 is attached to the wheel axle 48 and rotation of the planet gear carrier 104 causes rotation of the wheel axle 48. This rotation, in turn, overcomes the resistance of the bearings, seals, and the ground contact of the wheels and causes rotation of the wheels to drive the powered lawn device.

When the operator chooses to disengage the drive again, he or she can manually urge rotation of the locking shaft 126 to the disengaged position. Even as the ring gear 110 is under a rotational load condition or even while rotating, rotation of the locking shaft 126 is relatively easy, as the D-shaped cross-section 134 rotates in sliding engagement with the curved surface 122, enabling disengagement of the locking shaft 126 with relatively little force required. Additionally, the described apparatus and methods enable the use of a gear train locking device (e.g., a transmission locking device) that can engage gears or shafts of the gear train, transmission, epicyclic drive, etc. without using a clutch. Additionally, the described apparatus and methods enable the use of a gear train locking device to engage elements of the gear train, transmission, epicyclic drive, etc. without using a clutch while the elements to be engaged are under load and/or are rotating.

The driveshaft 52 is an elongated shaft that is rotatable relative to the transfer casing 40. At least a portion of the driveshaft 52 extends forwardly from the transfer casing 40 to allow the driveshaft to be operatively connected to the power source 12. In an embodiment, a first end of the driveshaft 52 is driven by a belt-and-pulley connection with the rotational output of the power source 12, which provides for an indirect rotational transfer to the driveshaft 52 from the power source 12. In another embodiment, the first end of the driveshaft 52 is coupled to the crankshaft (not shown) of the power source 12 for direct rotational transfer to the driveshaft 52. The driveshaft 52 is substantially horizontally aligned within the transfer casing 40. The driveshaft 52 is configured to rotate about is longitudinal axis, which is similarly horizontally oriented. The driveshaft 52 is positively positioned within the transfer casing 40 by way of bearings adjacent to the forward end of the transfer casing (in the transmission housing 42) as well as adjacent to the rearward end (in the power head housing 46). In an embodiment, the driveshaft 52 engages the transmission assembly 19 via worm gear that is formed into the outer circumferential surface of the driveshaft 52. The worm gear connection on the driveshaft 52 (FIG. 5A) transfers the longitudinal (horizontal) rotation of the driveshaft 52 into lateral (horizontal) rotation of the wheel axles 48, thereby driving the wheels 16. In an embodiment, the engagement between the driveshaft 52 and the transmission assembly 19 is by way of selective engagement in which the operator selectively causes the engagement/disengagement. In another embodiment, the engagement between the driveshaft 52 and the transmission assembly 19 is continuous.

In operation, the power source 12 produces a rotational output, which is transferred to the driveshaft 52, thereby causing the driveshaft 52 to rotate about the longitudinal axis thereof. As the driveshaft 52 rotates, the transfer gear 54 coupled to the driveshaft 52 rotates in a similar manner. The driveshaft 52 also selectively drives the transmission assembly 19 that is operatively coupled to the driveshaft 52.

Turning to FIG. 11, a second embodiment of the gear drive assembly is shown as an epicyclical gear train 200 having a plurality of planetary gear sets 204, 206. Each planetary gear set 204, 206 includes a sun gear 208 that defines an aperture 210. The sun gear 208 is connected to an input device 214. One example of an input device 214 can be a secondary drive shaft that is powered by driveshaft 52. The input device 214 is configured to rotate and transfer rotational power to the sun gear 208 such that rotation of the input device 214 rotates the sun gear 208. In one example, as shown in FIG. 12, the input device can pass through the aperture 210.

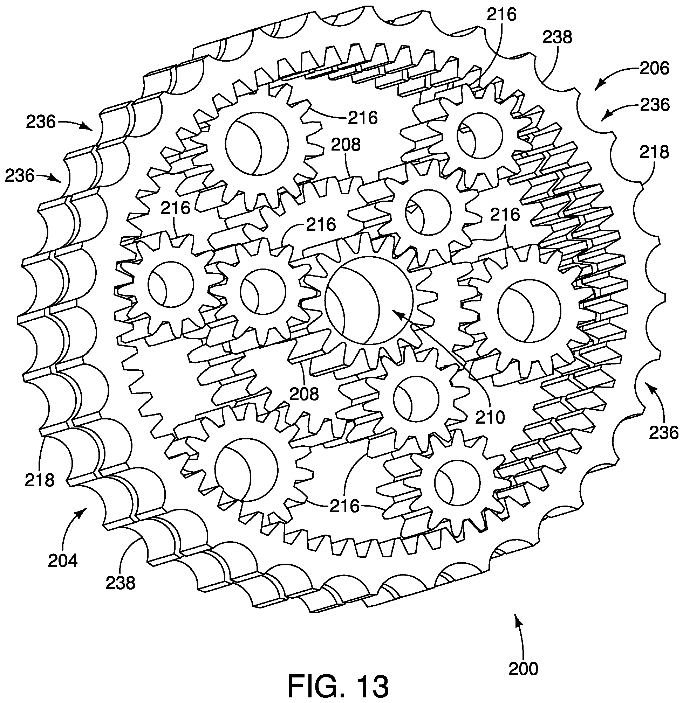

As shown in FIGS. 11 and 13, the planetary gear set 204, 206 also includes a plurality of planet gears 216 engaged with the sun gear 208. In turn, the planet gears 216 are engaged with a ring gear 218. A carrier 220 is operably connected to the planet gears 216 such that revolution of the planet gears 216 relative to the sun gear 208 rotates the carrier 220 about a central axis 224. The planetary gear set 204, 206 further includes an output 226 connected to the carrier 220, one example of which is an output shaft.

The epicyclical gear train 200 further includes a stationary member, one example of which is the transmission housing 42, however any suitable stationary object will suffice. A locking shaft 228 is mounted to the stationary member and includes an outside diameter 230 and a shaft axis 234. The locking shaft 228 is configured to rotate about the shaft axis 234 to selectively move the locking shaft 228 between an engaged position and a disengaged position. The engaged position places the outside diameter 230 of the locking shaft 228 into engagement with at least one of the ring gears 218 to create a physical interference preventing rotation of at least one of the ring gears 218 relative to the stationary member. This engagement enables rotation of the input device 214 to cause change in the rotation of the output 226.

As with the first embodiment, the epicyclical gear train 200, can include ring gears 218 that define a plurality of cavities 236. Each of the cavities 236 has a curved surface 238 and the locking shaft 228 rotates into and out of the engaged position through sliding contact with the curved surface 238 of at least one of the ring gears 216.

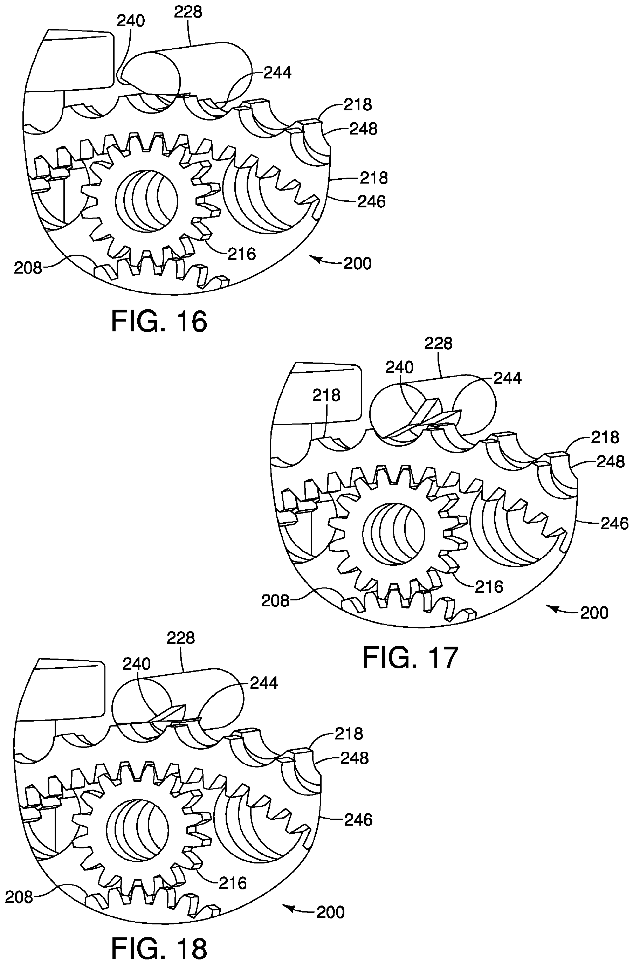

As shown in FIGS. 11 and 16-18, the locking shaft 228 can include at least two partial cross-sections 240, 244 that are D-shaped, or have a partial circumference. Each of the D-shaped cross-sections 240, 244 is configured to cooperate with one of the ring gears 216. In one example, the D-shaped cross-sections 240, 244 are non-coplanar such that the locking shaft 228 is configured to be rotated to at least four positions wherein the locking shaft 228 can be in an engaged position or a disengaged position with each of the ring gears 218. For example, as shown in FIG. 18, a first position for the locking shaft 228 corresponds to the disengaged position for a first gear 246 and a second gear 248 of the ring gears 218. As shown in FIG. 16, a second position corresponds to the disengaged position for the first gear 246 and the engaged position for said second gear 248 of the ring gears 218. As shown in FIG 17, a third position corresponds to the engaged position for the first gear 246 and the disengaged position for the second gear 248 of the ring gears 218. As can be appreciated FIG. 11 shows a fourth position that corresponds to the engaged position for the first gear 246 and the second gear 248 of the ring gears 218.

One having skill in the art will understand that differing planet gear 216 arrangements can produce various gear reductions to produce desired forward and reverse speeds for the lawn implement or other power driven device. For example, using the planetary gear sets 204, 206 as shown in FIGS 13 and 16, differing positions of the locking shaft 228 can develop a reverse gear having speeds in particular ratios to the speeds of the forward gear.

It is also to be appreciated that the present disclosed apparatus can be used to shift between forward and reverse gears in a transmission. Because of the rotational motion of the locking shaft 228 and the sliding contact with the cavities 236, this shift can be achieved with relatively low force. Furthermore, the transmission can be shifted between forward and reverse gears without a clutch and while the transmission is under load.

While preferred embodiments of the present invention have been described, it should be understood that modifications may be made without departing from the present invention as defined by the appended claims.

## Claims

1. A gear train locking device (100) comprising:
a plurality of gears (106, 108, 110), wherein said gears include teeth such that said teeth from one of said plurality of gears (106, 108, 110) engages said teeth from another of said plurality of said gears (106, 108, 110)in order to transmit rotational motion from one of said plurality of gears (106, 108, 110) to another of said plurality of said gears (106, 108, 110);
a plurality of shafts (48, 118), wherein said shafts (48, 118) are connected to said gears (106, 108, 110) for transmitting rotational motion; and
a locking shaft (126) having an outside diameter (128) and a shaft axis (130), said locking shaft (126) rotates about said shaft axis (130),
wherein rotation of said locking shaft (126) selectively moves said locking shaft (126) between an engaged position and a disengaged position,
wherein the engaged position places said outside diameter (128) of said locking shaft (126) into engagement with one of said gears (106, 108, 110) or said shafts (48, 118) to provide a physical interference between said locking shaft (126) and said gear (106, 108, 110) or said shaft to change the rotational motion of at least one of said gears (106, 108, 110) or said shafts (48, 118)
**characterized in that** at least one of said gears (106, 108, 110) or said shafts (48, 118) defines a plurality of cavities (120), each of said cavities (120) having a curved surface (122) and said locking shaft (126) is configured to rotate into and out of the engaged position through sliding contact with said curved surface (122).

2. The gear train locking device (100) according to claim 1, wherein said locking shaft (126) rotates into and out of the engaged position through sliding contact with one of said gears (106, 108, 110) or said shafts (48, 118).

3. The gear train locking device (100) according to claim 3, wherein said cavities (120) are located at an outside diameter (124) of a portion of at least one of said gears (106, 108, 110) or said shafts (48, 118).

4. The gear train locking device (100) according to claim 1, wherein said locking shaft (126) is configured to be rotated into and out of the engaged position while said gear train is under load.

5. The gear train locking device (100) according to claim 1, wherein said locking shaft (126) further comprises a partial cross-section (134) that is D-shaped, the flat portion of said D-shaped cross-section (134) is substantially tangential to said gear (106, 108, 110) or said shaft (48, 118),
wherein the disengaged position of said locking shaft (126) removes said physical interference and enables said gear (106, 108, 110) or said shaft (48, 118) to rotate relative to another of said gears (106, 108, 110).

6. A gear train locking device according to claim 1, including a planetary gear device having a central axis (224), the planetary gear device comprising:
a stationary member;
an input device (214), wherein said input device (214) is configured to rotate;
a sun gear (208) connected to said input device (214) such that rotation of the input device (214) rotates said sun gear (208), wherein said sun gear (208) defines an aperture (210);
wherein said plurality of gears is a plurality of planet gears (216) engaged with said sun gear (208);
a ring gear (218), wherein said ring gear (218) is engaged with said planet gears (216);
a carrier (220) operably connected to said planet gears (216) such that revolution of said planet gears (216) relative to said sun gear (208) rotates said carrier (220) about said central axis (224);
an output shaft (226) connected to said carrier (220) , wherein said output shaft (226) is concentric with said central axis (224) and extends through said aperture (210) in said sun gear (208);
wherein the engaged position places said outside diameter (230) of said locking shaft (228) into engagement with said ring gear (218) to create a physical interference preventing rotation of said ring gear (218) relative to said stationary member such that rotation of the input device (214) causes rotation of the output shaft (226), wherein said ring gear (218) defines a plurality of cavities (236), each of said cavities (236) having a curved surface (238) and said locking shaft is (228) configured to rotate into and out of the engaged position through sliding contact with said curved surface (238).

7. The gear train locking device according to claim 6, wherein said cavities (236) are located adjacent an outside diameter (230) of a portion of said ring gear (218).

8. The gear train locking device according to claim 6, wherein said locking shaft (228) is configured to be rotated into the engaged position while said ring gear (218) is rotating.

9. The gear train locking device of claim 6, wherein said shaft axis (234) is parallel to said central axis (224).

10. The gear train locking device of claim 6, wherein said shaft axis (234) is located at a distance away from said central axis (224).

11. The gear train locking device according to claim 6, comprising two of said planetary gear sets.

12. The gear train locking device according to claim 6, wherein said locking shaft (228) further comprises at least two partial cross-sections (240, 244) that are D-shaped, wherein each of said D-shaped cross-sections (240, 244) is configured to cooperate with one of said ring gears (218).

13. The gear train locking device according to claim 6, wherein said D-shaped cross-sections (240, 244) are non-coplanar such that said locking shaft (228) is configured to be rotated to at least four positions,
wherein a first position corresponds to the disengaged position for a first gear (246) and a second gear (248) of said ring gears (218),
wherein a second position corresponds to the disengaged position for said first gear (246) of said ring gears (218) and the engaged position for said second gear (248) of said ring gears (218),
wherein a third position corresponds to the engaged position for said first gear (246) of said ring gears (218) and the disengaged position for said second gear (248) of said ring gears (218),
wherein a fourth position corresponds to the engaged position for said first gear (246) and said second gear (248) of said ring gears (218).

14. A transmission assembly (19), including a gear train locking device (100), wherein the gear train locking device is according to any of the previous claims.

15. A vertical tine tiller, comprising the transmission assembly (19) of claim 14.

## Patentansprüche

1. Getriebezugverriegelungsvorrichtung (100), umfassend:
eine Vielzahl an Getrieben (106, 108, 110), wobei diese Getriebe Zähne umfassen, sodass die Zähne eines Getriebes der Vielzahl an Getrieben (106, 108, 110) in die Zähne eines anderen Getriebes der Vielzahl an Getrieben (106, 108, 110) eingreifen, um die Drehbewegung von einem Getriebe der Vielzahl an Getrieben (106, 108, 110) auf ein anderes Getriebe der Vielzahl an Getrieben (106, 108, 110) zu übertragen;
eine Vielzahl an Wellen (48, 118), wobei die Wellen (48, 118) mit den Getrieben (106, 108, 110) verbunden sind, um die Drehbewegung zu übertragen, und
eine Verriegelungswelle (126), aufweisend einen Außendurchmesser (128) und eine Wellenachse (130), wobei sich die Verriegelungswelle (126) um die Wellenachse (130) dreht,
wobei die Drehung der Verriegelungswelle (126) selektiv die Verriegelungswelle (126) zwischen einer Eingriffsposition und einer Freigabeposition bewegt,
wobei die Eingriffsposition den Außendurchmesser (128) der Verriegelungswelle (126) in Eingriff mit einem der Getriebe (106, 108, 110) oder einer der Wellen (48, 118) positioniert, um eine materielle Interferenz zwischen der Verriegelungswelle (126) und dem Getriebe (106, 108, 110) oder der Welle bereitzustellen, um die Drehbewegung von mindestens einem der Getriebe (106, 108, 110) oder Wellen (48, 118) zu ändern,
**dadurch gekennzeichnet, dass** mindestens eins der Getriebe (106, 108, 110) oder eine der Wellen (48, 118) eine Vielzahl an Hohlräumen (120) definiert, wobei ein jeder der Hohlräume (120) eine gekrümmte Oberfläche (122) aufweist und die Verriegelungswelle (126) ausgelegt ist, um sich durch Verschiebungskontakt mit der gekrümmten Oberfläche (122) in die Eingriffsposition und aus dieser zu drehen.

2. Getriebezugverriegelungsvorrichtung (100) nach Anspruch 1, wobei sich die Verriegelungswelle (126) durch Verschiebungskontakt mit einem der Getriebe (106, 108, 110) oder einer der Wellen (48, 118) in die und aus der Eingriffsposition dreht.

3. Getriebezugverriegelungsvorrichtung (100) nach Anspruch 3, wobei sich die Hohlräume (120) an einem Außendurchmesser (124) eines Abschnitts von mindestens einem der Getriebe (106, 108, 110) oder einer der Wellen (48, 118) befinden.

4. Getriebezugverriegelungsvorrichtung (100) nach Anspruch 1, wobei die Verriegelungswelle (126) ausgelegt ist, um in die und aus der Eingriffsposition gedreht zu werden, während der Getriebezug unter Last ist.

5. Getriebezugverriegelungsvorrichtung (100) nach Anspruch 1, wobei die Verriegelungswelle (126) zudem einen Teilquerschnitt (134) umfasst, der D-förmig ist, wobei der flache Abschnitt des D-förmigen Querschnitts (134) im Wesentlichen tangential zum Getriebe (106, 108, 110) oder der Welle (48, 118) angeordnet ist,
wobei die Freigabeposition der Verriegelungswelle (126) die materielle Interferenz beseitigt und ermöglicht, dass sich das Getriebe (106, 108, 110) oder die Welle (48, 118) relativ zu einem anderen der Getriebe (106, 108, 110) dreht.

6. Getriebezugverriegelungsvorrichtung nach Anspruch 1, einschließend eine Planetengetriebevorrichtung, aufweisend eine mittlere Achse (224), wobei die Planetengetriebevorrichtung umfasst:
ein stationäres Element;
eine Eingangsvorrichtung (214), wobei die Eingangsvorrichtung (214) ausgelegt ist, um sich zu drehen;
ein Sonnenrad (208), verbunden mit der Eingangsvorrichtung (214), sodass die Drehung der Eingangsvorrichtung (214) das Sonnenrad (208) dreht, wobei das Sonnenrad (208) eine Öffnung (210) definiert, wobei die Vielzahl an Getrieben eine Vielzahl an Planetengetrieben (216) im Eingriff mit dem Sonnenrad (208) ist;
ein Tellerrad (218), wobei das Tellerrad (218) im Eingriff mit den Planetengetrieben (216) ist;
einen Mitnehmer (220), der betriebswirksam mit den Planetengetrieben (216) verbunden ist, sodass die Drehung der Planetengetriebe (216) relativ zum Sonnenrad (208) den Mitnehmer (220) um die mittlere Achse (224) dreht;
eine Abtriebswelle (226), verbunden mit dem Mitnehmer (220), wobei die Abtriebswelle (226) konzentrisch zur mittleren Achse (224) angeordnet ist und sich durch die Öffnung (210) im Sonnenrad (208) erstreckt,
wobei die Eingriffsposition den Außendurchmesser (230) der Verriegelungswelle (228) im Eingriff mit dem Tellerrad (218) positioniert, um eine materielle Interferenz zu schaffen und die Drehung des Tellerrads (218) zum stationären Element zu verhindern, sodass die Drehung der Eingangsvorrichtung (214) die Drehung der Abtriebswelle (226) verursacht, wobei das Tellerrad (218) eine Vielzahl an Hohlräumen (236) definiert, wobei ein jeder der Hohlräume (236) eine gekrümmte Oberfläche (238) aufweist und die Verriegelungswelle (228) ausgelegt ist, um sich durch Verschiebungskontakt mit der gekrümmten Oberfläche (238) in die und aus der Eingriffsposition zu drehen.

7. Getriebezugverriegelungsvorrichtung nach Anspruch 6, wobei die Hohlräume (236) angrenzend an einem Außendurchmesser (230) eines Abschnitts des Tellerrads (218) angeordnet sind.

8. Getriebezugverriegelungsvorrichtung nach Anspruch 6, wobei die Verriegelungswelle (228) ausgelegt ist, sich in die Eingriffsposition zu drehen, während sich das Tellerrad (218) dreht.

9. Getriebezugverriegelungsvorrichtung nach Anspruch 6, wobei die Wellenachse (234) parallel zur mittleren Achse (224) angeordnet ist.

10. Getriebezugverriegelungsvorrichtung nach Anspruch 6, wobei die Wellenachse (234) in einem Abstand wegführend von der mittleren Achse (224) angeordnet ist.

11. Getriebezugverriegelungsvorrichtung nach Anspruch 6, umfassend zwei der Planetengetriebesätze.

12. Getriebezugverriegelungsvorrichtung nach Anspruch 6, wobei die Verriegelungswelle (228) zudem mindestens zwei Teilquerschnitte (240, 244) umfasst, die D-förmig sind, wobei ein jeder der D-förmigen Querschnitte (240, 244) ausgelegt ist, um mit einem der Tellerräder (218) zu kooperieren.

13. Getriebezugverriegelungsvorrichtung nach Anspruch 6, wobei die D-förmigen Querschnitte (240, 244) nicht koplanar sind, sodass die Verriegelungswelle (228) ausgelegt ist, um in mindestens vier Positionen gedreht zu werden,
wobei eine erste Position der Freigabeposition für ein erstes Rad (246) und ein zweites Rad (248) der Tellerräder (218) entspricht,
wobei eine zweite Position der Freigabeposition für das erste Rad (246) der Tellerräder (218) und der Eingriffsposition für das zweite Rad (248) der Tellerräder (218) entspricht,
wobei eine dritte Position der Eingriffsposition für das erste Rad (246) der Tellerräder (218) und der Freigabeposition für das zweite Rad (248) der Tellerräder (218) entspricht,
wobei eine vierte Position der Eingriffsposition für das erste Rad (246) und das zweite Rad (248) der Tellerräder (218) entspricht.

14. Antriebsanordnung (19), einschließend eine Getriebezugverriegelungsvorrichtung (100), wobei die Getriebezugverriegelungsvorrichtung nach einem der vorhergehenden Ansprüche ausgelegt ist.

15. Fräse mit vertikalen Zinken, umfassend die Antriebsanordnung (19) aus Anspruch 14.

## Revendications

1. Dispositif de verrouillage de train d'engrenages (100) comprenant :
une pluralité d'engrenages (106, 108, 110), dans lequel lesdits engrenages incluent des dents de manière à ce que lesdites dents d'un engrenage de ladite pluralité d'engrenages (106, 108, 110) se mettent en prise avec lesdites dents d'un autre engrenage de ladite pluralité desdits engrenages (106, 108, 110) afin de transmettre le mouvement de rotation de l'un des engrenages de ladite pluralité d'engrenages (106, 108, 110) à l'autre engrenage de ladite pluralité desdits engrenages (106, 108, 110) ;
une pluralité d'arbres (48, 118), dans lequel lesdits arbres (48, 118) sont reliés auxdits engrenages (106, 108, 110) pour transmettre le mouvement de rotation ; et
un arbre de verrouillage (126) ayant un diamètre extérieur (128) et un axe de l'arbre (130), ledit arbre de verrouillage (126) tourne autour dudit axe de l'arbre (130),
dans lequel la rotation dudit arbre de verrouillage (126) déplace de façon sélective ledit arbre de verrouillage (126) entre une position de mise en prise et une position désengagée,
dans lequel la position de mise en prise place ledit diamètre extérieur (128) dudit arbre de verrouillage (126) en prise avec l'un desdits engrenages (106, 108, 110) ou desdits arbres (48, 118) pour fournir une interférence physique entre ledit arbre de verrouillage (126) et ledit engrenage (106, 108, 110) ou ledit arbre pour modifier le mouvement de rotation d'au moins l'un desdits engrenages (106, 108, 110) ou desdits arbres (48, 118)
**caractérisé en ce qu'**au moins un desdits engrenages (106, 108, 110) ou desdits arbres (48, 118) définit une pluralité de cavités (120), chacune desdites cavités (120) comportant une surface incurvée (122) et ledit arbre de verrouillage (126) est configuré pour tourner dans et hors de la position de mise en prise par contact coulissant avec ladite surface incurvée (122).

2. Dispositif de verrouillage de train d'engrenages (100) selon la revendication 1, dans lequel ledit arbre de verrouillage (126) tourne dans et hors de la position de mise en prise par contact coulissant avec l'un desdits engrenages (106, 108, 110) ou desdits arbres (48, 118).

3. Dispositif de verrouillage de train d'engrenages (100) selon la revendication 3, dans lequel lesdites cavités (120) sont situées en correspondance d'un diamètre extérieur (124) d'une partie d'au moins un desdits engrenages (106, 108, 110) ou desdits arbres (48, 118).

4. Dispositif de verrouillage de train d'engrenages (100) selon la revendication 1, dans lequel ledit arbre de verrouillage (126) est configuré pour pouvoir tourner dans et hors de la position de mise en prise pendant que ledit train d'engrenages est sous charge.

5. Dispositif de verrouillage de train d'engrenages (100) selon la revendication 1, dans lequel ledit arbre de verrouillage (126) comprend de plus une section transversale (134) partielle en forme de « D », la partie plate de ladite section transversale (134) en forme de « D » est substantiellement tangentielle au dit engrenage (106, 108, 110) ou au dit arbre (48, 118),
dans lequel la position désengagée dudit arbre de verrouillage (126) retire ladite interférence physique et active ledit engrenage (106, 108, 110) ou ledit arbre (48, 118) pour tourner par rapport à un autre desdits engrenages (106, 108, 110).

6. Dispositif de verrouillage de train d'engrenages selon la revendication 1, incluant un dispositif d'engrenages planétaires ayant un axe central (224), le dispositif d'engrenages planétaires comprenant :
un organe stationnaire ;
un dispositif d'entrée (214), dans lequel ledit dispositif d'entrée (214) est configuré pour tourner ;
un pignon solaire (208) relié au dit dispositif d'entrée (214) de sorte que la rotation du dispositif d'entrée (214) fait tourner ledit pignon solaire (208), dans lequel ledit pignon solaire (208) définit une ouverture (210) ;
dans lequel ladite pluralité d'engrenages est une pluralité d'engrenages planétaires (216) se mettant en prise avec ledit pignon solaire (208) ;
une couronne (218), dans lequel ladite couronne (218) se met en prise avec lesdits engrenages planétaires (216) ;
un support (220) fonctionnellement relié auxdits engrenages planétaires (216) de sorte que la révolution desdits engrenages planétaires (216) par rapport au dit pignon solaire (208) fait tourner ledit support (220) autour dudit axe central (224) ;
un arbre de sortie (226) relié au dit support (220), dans lequel ledit arbre de sortie (226) est concentrique au dit axe central (224) et se prolonge à travers ladite ouverture (210) dans ledit pignon solaire (208) ;
dans lequel la position de mise en prise place ledit diamètre extérieur (230) dudit arbre de verrouillage (228) en prise avec ladite couronne (218) pour créer une interférence physique empêchant la rotation de ladite couronne (218) par rapport au dit organe stationnaire de manière à ce que la rotation du dispositif d'entrée (214) provoque la rotation de l'arbre de sortie (226), dans lequel ladite couronne (218) définit une pluralité de cavités (236), chacune desdites cavités (236) comportant une surface incurvée (238) et ledit arbre de verrouillage (228) est configuré pour tourner dans et hors de la position de mise en prise par contact coulissant avec ladite surface incurvée (238).

7. Dispositif de verrouillage de train d'engrenages selon la revendication 6, dans lequel lesdites cavités (236) sont situées adjacentes en correspondance d'un diamètre extérieur (230) d'une partie de ladite couronne (218).

8. Dispositif de verrouillage de train d'engrenages selon la revendication 6, dans lequel ledit arbre de verrouillage (228) est configuré pour pouvoir tourner dans la position de mise en prise pendant que ladite couronne (218) tourne.

9. Dispositif de verrouillage de train d'engrenages selon la revendication 6, dans lequel ledit axe de l'arbre (234) est parallèle au dit axe central (224).

10. Dispositif de verrouillage de train d'engrenages selon la revendication 6, dans lequel ledit axe de l'arbre (234) est situé à une certaine distance dudit axe central (224).

11. Dispositif de verrouillage de train d'engrenages selon la revendication 6, comprenant deux desdits ensembles d'engrenages planétaires.

12. Dispositif de verrouillage de train d'engrenages selon la revendication 6, dans lequel ledit arbre de verrouillage (228) comprend de plus au moins deux sections transversales (240, 244) partielles en forme de « D », dans lequel chacune desdites sections transversales en « D » (240, 244) est configurée pour coopérer avec une desdites couronnes (218).

13. Dispositif de verrouillage de train d'engrenages selon la revendication 6, dans lequel lesdites sections transversales en « D » (240, 244) sont non-coplanaires de sorte que ledit arbre de verrouillage (228) est configuré pour pouvoir tourner dans au moins quatre positions,
dans lequel une première position correspond à la position désengagée pour un premier engrenage (246) et un second engrenage (248) desdites couronnes (218),
dans lequel une seconde position correspond à la position désengagée pour ledit premier engrenage (246) desdites couronnes (218) et à la position de mise en prise pour ledit second engrenage (248) desdites couronnes (218),
dans lequel une troisième position correspond à la position de mise en prise pour ledit premier engrenage (246) desdites couronnes (218) et à la position désengagée pour ledit second engrenage (248) desdites couronnes (218),
dans lequel une quatrième position correspond à la position de mise en prise pour ledit premier engrenage (246) et ledit second engrenage (248) desdites couronnes (218).

14. Assemblage de transmission (19), incluant un dispositif de verrouillage de train d'engrenages (100), dans lequel le dispositif de verrouillage de train d'engrenages est selon l'une quelconque des revendications précédentes.

15. Fraiseuse de labour à pointes verticales, comprenant l'assemblage de transmission (19) selon la revendication 14.
